# EUROPEAN PATENT APPLICATION

(11) **EP 1 686 095 A1**
(43) Date of publication of application: **02.08.2006**
(21) Application number: 06001855.3
(22) Date of filing: 30.01.2006
(51) Int. Cl.: C02F 1/32, C02F 1/72, A01K 63/04

(54) **Photocatalytic reactor with a modular configuration and advanced oxidation process for purifying and disinfecting wastewater from aquaculture**

(30) Priority: 31.01.2005 CL 1842005; 31.01.2005 CL 1852005
(71) Applicant: Universidad Católica de la Santisima Concepción, Octava Region (CL)
(72) Inventor: Venegas Cabello, Pablo Arturo, Caupolica 491, Concepcion Octava Region (CL); Yeber Ortis, Maria Cristina, Caupolica 491, Concepcion Octava Region (CL); Narvaez Dinamarca, Ana Lorena, Caupolica 491, Concepcion Octava Region (CL); del Pilar Sobenes Vennekool, Catterina, Caupolica 491, Concepcion Octava Region (CL); Ortiz Sanhueza, Carlos Mauricio, Caupolica 491, Concepcion Octava Region (CL)
(74) Representative: Rupp, Christian

(57) **Abstract**

A photocatalytic reactor with a modular configuration, based on UV light sources and a catalyst, useful for purifying and disinfecting wastewater from confined aquaculture, using Advanced Oxidation Processes (AOP), wherein the catalyst is supported over glass sheets as fixed strips within said reactor, at an established distance from the UV light source, and wherein the wastewater is treated as "batches" being re-circulated and returned to the circuit. The wastewater is fed through the lower end of the reactor and submitted to a strong turbulence when passing through perforations or holes made on the supports forming the floor of the reaction chambers.

## Description

The present invention is related with a photocatalytic reactor based on UV light sources and a supported titanium dioxide (Tio₂) based catalyst, and gas ozone for producing hydroxyl radicals, useful for purifying wastewater from confined aquaculture systems, mediated by an advanced oxidative process. Wherein, the photocatalytic reactor comprises a supported catalyst, which allows the removal of ammonium, nitrite, as well as the removal of water soluble organic matter and water disinfection, it also refers to the method for using and the operation of the same.

A variety of treatments or methods for purifying water, for removing nitrogenous compounds, and for removing the dissolved organic matter, specifically in waste water from the culturing of hydrobiologic species, are known in the prior art, said methods comply independently or in combination their functions. Among the more known of said methods are comprised: the biologic filter purification water system, the foam fractionator's purification water system, the activated charcoal purification water system, the ozonification purification water system, the UV light purification water system, etc.

The following corresponds to a brief description of the above mentioned methods, which are used for wastewater purification, specifically waste water from fish farming.

Biologic filter purification water system: corresponds to a equipment and supplies set, which can have diverse configurations, including from simple gravel filter through complex filtration systems. The most used configuration on intensive aquaculture, is based in the use of nitrifying bacteriae, which are duly supported over a specific substrat. Different dimensions and configurations from the bed and/or rotatory types can be found in this system. The system main features are:
- The bacteria supporting medium must allow the microoragnisms growth
- A rigid operation design, i.e. for an established configuration, standard operation variables are required.
- The system sizing depends on great many variables, such as: dissolved oxigen amount, dissolved and suspended organic material concentration, the density of the hydrobiological specie culture, the biofilter entry and exit flux, the pH value, the dissolved oxygen and ammonia concentration, the water renewal rate, among others.
- A permanent and continuous flux of the waste water to be treated, is required.

Foam Fractionator purification water system: corresponds to a device, using air injection through a diffuser, wherein the air is admixed with the waste water. The oxygen from air oxides and coagulates part of the dissolved organic material, thus forming foam with the organic matter, which subsequently is removed. It is a simple equipment, ussually it will be fomed by a PVC pipe which, when occurs a pressed air flux entry, produces turbulence and bubbles, which contact the dissolved organic matter dissolved of the waste water, producying a foam. The main features of this system are:
- It can have different configurations and designs, which features are;
- the system sizing is related, among others, to the inlet air flux, the size of the forming bubble (a mean bubbling caliber of 250 to 350 nm, is recommended), the kind of gas to be used (air, from oxygen to ozone), the air application way, the gas and water flux.

Activated charcoal purification water system: this system corresponds to a device, which contains a burned plant material bed, having a microcrystalline structure, similar to the graphite one. It is a simple equipment, usually comprising an strong plastic external structure, as a container, wherein the inner part of the container contains the activated charcoal. The waste water to be treated is passed by inside the container, in order to contact with the activated charcoal. The main features of this system are:
- It can have different configurations and designs;
- The design, depends on the material to be used for manufacturing the activated charcoal, (which finally affects activated charcoal porosity and granulometry).
- The design is established by the required specific surface of the activated charcoal.
   Ozonization purification water system: This system consists on a method of using an electrocemical reaction for producing triatomic oxygen molecules, which are formed by the an oxygen molecule excitation, through a high voltage discharge. In an Ozone generator (O₃), through the interaction of air with a high voltage field. The system may exhibit different dimentions and configurations.
- The ozone amount produced is directly related with the generation and the electric discharge ability within the reaction chamber.
   UV light purification water system: Device, for disinfecting water by means of a UV light source.
- It occurs in a closed and airtight system equipment, wherein the waste water from a culture flows, contacting the UV radiation emitted by the UV lamp. It can have different configurations (number of UV lamps).
- The design depends on variables, such as: the waste water flux to be treated, the exposition time, the kind of bacteria, or fungus to be treated, the suspended solids concentration (turbidity), among others.

The closed and air tight equipment, named reactor, is known and has been used and disclosed in the prior art.

The conventional way of removing the liquid pollulants produced by those intensive aquiculture processes in recirculating systems, considers the use of mechanical filtering for removing the organic material and biological filters for removing the nitrogenous compounds. The system comprising the use of UV light sources, has become the most used water desinfecting system, mainly by the low cost of the same, the treatment time and the absence of any effect over the hydrobiological cultured species. Nevertheless, its efficiency is limited by the presence of suspended solids, what causes a "shadow" or shield effect over bacteriae and other microorganisms.

A good development has been achieved by these treatment systems, however, they exhibit some inconveniences, as the operation and maintenance complexity, and the non efficient filtering, which maintains the hydrobiological species submitted to amonnium and carbon dioxide sub-lethal concentration levels.

In order to stabilize the removing ability, the biological filters require of at least a 30 days period, due to the growth of the *nitrosome* and *nitrobacter* bacteria, which convert NH₄⁺, and NH₃ into NO₂, and transform N0₂ into N0₃^{*} respectively. Additionally, the bacteria must be kept at stable temperature levels, being from 24 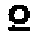 C up the optimal temperature range for the nitrogenous compounds remotion, and a pH range value between 7 and 8. Further, these systems require of a minimal dissolve ammonia concentration in water, for avoiding the bacteria inactivation or death, and its filtration efficiency is afected by the existence of the competitiveness for the environmental conditions, of other bacteria degrading organic matter. These facts, turn the biologic filter so unstable, requiring of stabilization periods, what can be a risk for the continuity of the hydrobiological species production in the confined culture, causing lethal water quality levels. Likewise, the mechanical filtering systems require of sieves for retaining the suspended and dissolved particles, which require of a constant maintenance of the retained particles remotion, in order to keep the filters removing efficiency.

The prior art shows a variety of studies related to organic compounds photo-oxidation, mainly for phenolic type compounds (Beltrán y et al., 1995 a,b; Preis et al., 1995; Beltrán et al.,1996 a,b; Pichat et al., 1996), which are used as model, with the purpose of studying the mechanisms involved in the degradation. Additionally, in said studies has been demonstrated, that the photo-oxidative systems are efficient upon mineralisation. Some researchers have used model compounds for studying oxidation, specifically phenolic-chlorine compounds, such as 2,4-dichlorophenol, 2,4-dichlorophenoxyacetic acid (2,4-D), in order to asses the subsequent application of the ssytem in removing pesticides and herbicides contained in waste water or in the treatment of industrial waste water. The oxidation of these compounds is highly efficient, achieving the complete mineralization of the same, after short treatment periods. The decomposition of black liquor from the kraft pulp process was studied in photocatalytic oxidative sistems, said liquor principally contains phenolic compounds derivated from lignin high concentrations, wherein it is concluded that the mineralization of phenolic derivatives occurs between 95% and 96%, by means of photocatalysis processes and not by other routes.

The organic compound 4-chlorophenol was used as a model for comparing the efficiency of different AOP systems (Advanced Oxidation Processes), based on the degradation of said compound, demonstrating that an ozone treatment achieved between 59% and 60% of mineralisation, during a 6 hours period, or a 4 hour period for an ozone/UV treatment was necessary, and a period of 2.5 hours for the photo Fenton system was necessary, while when the UV/Peroxide system is used, the decomposition is not achieved. On the other hand, regarding the reactivity upon organic compounds, it was demonstrated, that the degradative levels are highly dependent from the chemical structure of substrates, finding that phenol substrate is more reactive than chlorophenol substrate. It has been shown that an effluent with a high content of non biodegradable organic compounds, can de degraded by means of homogenous as well as heterogeneous photo oxidative systems, significantly raising the effluent biodegradability in few minutes of reaction, being the titanium dioxide (TiO₂) semiconductor system the most efficient, removing 80% of TOC and diminishing the by 50% the effluent toxicity. On the other hand, a rotatory photocatalytic reactor was designed, which was used for degradating phenol. The degradation efficiency was compared using a mercury lamp with a UV light (λ>254 nm), and sunlight. The researchers demonstrated that phenol can be quickly degraded and mineralised in the reactor by the UV lamp, and also, that it can be degraded in relatively short time periods when sunlight is used. The TOC in solution diminishes slowly, nevertheless, the disappearance of phenol occurs faster, which could indicate, that phenol is possibly mineralised into CO₂ through intermediate products, which could be useful as a carbon source for microorganisms in the case of a subsequent biologic treatment of the effluent, or simply if the effluent is poured over a water body after the oxidation.

During a textile effluent decomposition, using an immobilized catalyst, a 97-98% of the effluent color reduction was achieved, the total organic carbon (TOC), was 50% reduced, and the effluent toxicity was a 73% reduced, on a 1 hour treatment period. When comparing the treatment with a suspended catalyst, the latter only achieved a 23% reduction of the total organic carbon (TOC) and a 28% reduction of the effluent toxicity, using the same immobilized catalyst, was continued the decomposition of four colouring agents, selected from those that are most used for dyeing in the textile industry: Reactive Orange-16, Reactive Red-2, Reactive yellow-2 and Reactive Blue-19.

On a term of 30 minutes of a photocatalytic treatment with each one of the colouring agents, between 48% and 50% of the organic matter was mineralised and the oxidation capability of the resting compounds, measured as DQO, shows a similar trend. The efficiency of the immobilized catalyst on the photocatalytic decompsition of a herbicide compound, Isoproturon (IP), one of the herbicides most used in Europe.

In colaboration with The Laboratory of Environmental Biotechnology, Institute of Environmental Engineering, the Swiss Federal Institute of Technology, Lausanne, Switzerland and the Plataforma Solar de Almeria-Espana, was tested the efficiency of the immobilized for the photocatallytic decomposition of Isoproturon, one of the most used herbicides in Europe. The herbicide was totally decomposed and the decomposition efficiency is compared with suspended catalyst efficiency. Further, it was once more demonstrated, that the catalyst efficiency is not reduced when the same is in an immobilized form, also it was established that after 300 hours of experimentation, the activity of the same is not affected.

In an embodiment of the instant invention a photochemical reactor is developed, which allows the function of the supported heterogeneous photocalalysis process, further to the use of ozone for the production of hydroxyl radicals, for being applied in intensive aquaculture systems.

Reactors applied for the treatment of atmospheres and effluents, are known, as the "Apparatus for High Flux Photocatalytic Pollution Control Using a Rotating Fluidized Bed Reactor" from the Florida Central University.

The US patent No 6,454,937, Horton et. al., describes an UV reactor for purifying water, which operational concept is similar, the reactor comprises UV light sources and ascending guide-pipes for leading the waste water entrance by the lower part of the reactor, wherein once treated the water returns to the exit at the lower part of the reactor by the outer side of the pipes, wherein sadi part does not operate as a catalyst.

Furthermore, it is important to mention the US patent No 6,414,213, Ohmori et. al., which concerns to a system for impregnating surfaces with titanium oxide (TiO₂), to be used as a catalyst.

On even an alternative embodiment of the present invention, is disclosed the method for using the photocatalyst of the present invention further to the radicals produced by the Ozone degradation (TiO₂/UV/O₃). The state of the art exhibits a plurality of studies related with organic compounds photo-oxidation, principally for compounds of the phenolic type, (Beltrán y et al., 1995 a, b; Preis et al., 1995; Beltrán et al., 1996 a,b; Pichat et al., 1996); which are used as model, with the purpose of studying the mechanisms involved on the decomposition, and where it has also been demonstrated, that the photo-oxidative systems are efficient regarding the mineralisation process. Some researchers, as Prado et al.,(1994) and Tang H. (1996), have used compounds as a model for the study of oxidation, specifically phenolic-chlorine compounds, such as 2,4-dichlorophenol, 2,4-dichlorophenoxy-acetic acid (2,4-D), in order to assess the subsequent application of the same in the removal of pesticides and herbicides from waste waters or in the treatment of industrial wastewaters. The oxidation of these compounds is so efficient, achieving the total mineralisation, after a short treatment period. In photocatalytic oxidation systems, Mansilla et al., (1994), studied the decomposition of black liquor from the Kraft pulp process, the liquor principally comprises phenolic compounds derived from lignin in high concentrations, where it is concluded that a 96% mineralisation of phenolic derivatives occurs due to photocatalysis and not through other route.

Bauer R. and Fallmann H. (1997), used 4-chlorophenol as the model for an organic compound, for comparing the efficiency of different AOP systems upon the decomposition, establishing that it achieves a 60% of mineralisation on a 6 hours period during a ozone treatment, or a 4 hours period using the ozone/UV system and a 2.5 hours period for the Photo-Fenton system, while with a UV/Peroxide system no decomposition was achieved. On the other hand, referred to reactivity measures upon organic compounds, it was demonstrated that the decomposition levels are highly dependent from the substrates chemical structure, finding that the phenol substrate is more reactive than the chlorophenol substrate. Yeber et al.,(1999), demonstrated that an effluent with a high content of non biodegradable organic compounds, can be decomposed through homogeneous as well as heterogeneous photo-oxidative systems, increasing significantly the effluent biodegradability in few minutes of reaction, being the system that uses semiconductor the titanium dioxide (TiO₂), the most efficient, with a 80% removal of TOC and diminishing by 50% the effluent toxicity. On the other hand, Toyoda et al. (2000), designed a rotatory photocatalytic reactor, which was used for decomposing phenol. They compared the decomposition efficiency using a UV lamp (λ»254 nm), and sunlight. The authors showed that phenol can be quickly degraded and mineralized in the reactor comprising the UV lamp, and that also it can be degraded in relatively short periods when it is applied with sun light. The TOC value of the solution diminishes slowly, nevertheless, the phenol disappearance is faster, which could indicate that phenol is possibly mineralized into CO₂ by means of intermediate products, which could serve as carbon source for the microorganisms in the case of a subsequent biologic treatment of the effluent, or simply if this one is poured in a water body after the oxidation.

On the decomposition of a textile effluent, using the immobiblized catalyst, was possible to reduce the effluent color in 98%, the Total Organic Carbon (TOC) in 50% and the effluent toxicity in 73%, for 1 hour period of treatment.

Comparing the treatment with a suspended catalyst, the latter only achieved a 23% of reduction of the TOC and 28% of the effluent toxicity reduction. Lizama et al., (2001) using the same immobilized catalyst continued the decomposition of four of the most used dyes in the industrial textile dyeing, Reactive Orange-16, Reactive Red-2, Reactive yellow-2 and Reactive Blue-19. Once passed 30 minutes of the photocatalytic treatment with each one of the dyes, the 50% of the organis matter was mineralised and the oxidability of the resting compounds measured as DQO, shows a similar trend. In collaboration with The Laboratory of Environmental Biotechnology, the Institute of Environmental Engineering, the Swiss Federal Institute of Technology, Lausanne, Switzerland and the Plataforma Solar de Almería-España, was tested the immobilized catalyst efficiency on the photocatalytic decomposition of the herbicide Isoproturon (IP), one of the most used herbicides in Europe.

The herbicide was totally degraded and the decomposition efficiency is compared with the efficiency of the suspended catalyst, furthernmore, once more, it was demonstrated that the efficiency of the catalyst is not reduced when this one is emmobilized, being possible to establish that after 300 experimentation hours, the activity is not affected. These results were published by por Parra et al.

On the other hand, the international literature comprises the addition of some substances which are able of enhancing the production of radicals, and therefore the degradation of pollutants, is the addition of substances in the solution or the dopping of the catalyst with any compound. On 2002, Jaesang L. carried out these type of experiences, wherein he increased in about 20% the dissolved ammonium degradation with TiO₂/UV plus 80% air using TiO₂ doped with Platinum and injecting N₂O during the process. Though, the ammonium degradation is increased, the economic viability (by the use of Platinum) and the environmental viability (by the use of N₂O, gas from the greenhouse effect) makes difficult its use in a massive way.

However, is is feasible the use of Hydrogen Peroxide (H₂O₂) or Ozone (O₃) as a producer of radical under UV light, which have demonstrated their efficiency for degrading organic aromatic compounds, among others (Hapeman-Somich et al., 1992 a,b, Paton et al., 1994, Mokrini et al., 1996).

The advantage of the process of the instant invention, is that it does not require previous fitting periods of the culture waste water for the photocatalytic treatment system, further to the radicals produced by the Ozone degradation (TiO₂/UV/O₃). The process does not produce solids or sediment compounds, which must be removed or eliminated, being the removal stable and continuous through the time.

The process can be applied for treatments requiring the presence of antibiotics, which is necessary on intensive aquaculture, unlike those systems depending from biologic filters. Likewise, the claimed process operates at low temperature conditions maintaining the removal efficiency, unlike those biologic filtration systems, which must be stable at their temperature since they depend from degrading bacteria, which work between 14 and 28°C. Further, for the process operation, it are not required minimal conditions related to the water pollutant concentration nor a stabilization time period, as needed by the biologic filter systems.

Additionally, the process allows generating the disinfection of waste water and the removal of nitrite and dissolved organic matter.

The process requires an operation term, for treating part of the total water volume from the original system.

The main problems associated to the design and operation of catalytic reactors using a supported catalyst can be summarized as follows:
The light energy that effectively reaches the catalyst, which depends on the absorbance of the fluid to be treated (the energy loss is directly proportional to the absorbance of the fluid), the amount of emitted energy by the UV light source (the light energy is inversely proportional to the source wavelength), the distance between the light source and the supported catalyst (the energy loss is directly proportional to the square of the distance between the source and the radiated surface) and the angle of incidence of the light energy on the catalyst surface (the energy loss is inversely proportional to the cosine of the incidence angle).

The area of the catalyst effectively radiated, which depends on the configuration and distribution of the supported catalyst and mainly of the variables that define the light energy that reached the catalyst. It is important to emphasize that the photochemical reaction (mass transference) occurs on the contact surface between the treated fluid and the catalyst, therefore, reason why it is necessary that the reactor design maximize effectively the catalyst radiated.

The fluid turbulence within the reactor is directly related to the place where the catalyst generates the mass transference of the pollutant compound, the contact surface between the catalyst and the fluid. The rate removal of the dissolved pollutant is directly related with the fluid turbulence within the reactor, since the contact between the pollutant particles and the catalyst surface is increased, when a higher exchange of the fluid to be treated on the reaction surface is generated.

The objective of the reactor of the present invention is to remove ammonium, dissolved organic matter and to disinfect the waste water from confined aquaculture, ncluding culture systems for fish, shellfish and crustacean, on their egg-larvae production phase, juvenile-seeds, fattening-growth, antibiotic application and maintenance of reproducers.

The reactor of the present invention has a cylindrical configuration in which inner part five ultraviolet lamps are arranged and a plurality of glass plates (36) covered with supported titanium oxide (TiO₂).

The reactor design features are:
- The cylindrical configuration, facilitates its construction.
- The supported catalyst is arranged in a annular type distribution around UV light lamps.
- Its modular configuration, facilitates the assembly and maintenance of the same.
- Its modular configuration, allows to handle different capacities and configurations (series and/or parallel) for waste water treatment.

Its reduced size, facilitates the transport and installation of the same.

The operational features of the reactor are:
- It does not require to recover the catalyst from the treated water.
- It does not require thermophilic conditioning.

The reactor uses Advanced Oxidation Processes (AOP), specifically, supported heterogeneous photocatalysis and the production of radicals trough the Ozone degradation, activated by artificial UV light sources.

The reactor requires a flow control, a previous pH conditioning, previous mechanical filtration and y time residence control in the process (of recirculation) of the water to be treated.

The substitute or competitor generic technologies, are directly related with the above mentioned removal and disinfection abilities. However, nowadays does not exist a technology in market able to carry out the three functions simultaneously, such as those described for the photocatalytic reactor and the production of radicals trough the Ozone degradation.

From now on, the present invention will be describerd with more detail, making reference to the accompanying figures, which illustate the following:
figure 1, shows a seccional cut of the water outlet pipe of the reactor;
figure 2, shows a seccional cut of the water intlet pipe of the reactor;

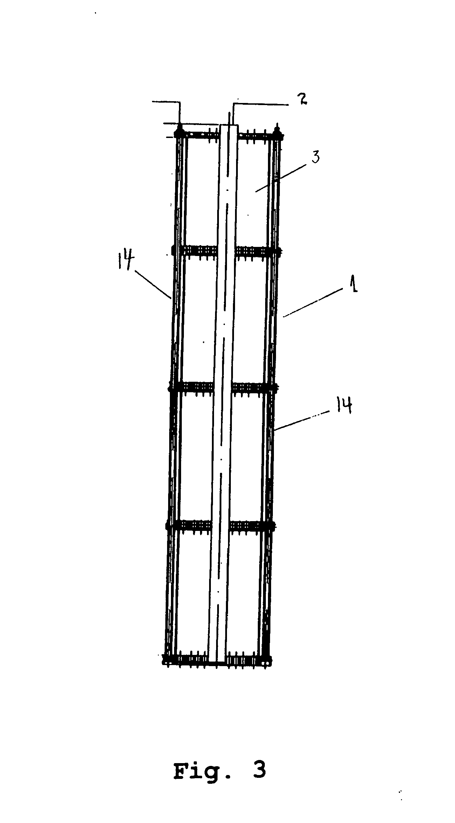

figure 3, shows a cut view of the reactor, wherein is observed the central tube (made of quartz), the fixation discs of the glass plates, the external tubes and the clamping bolt;

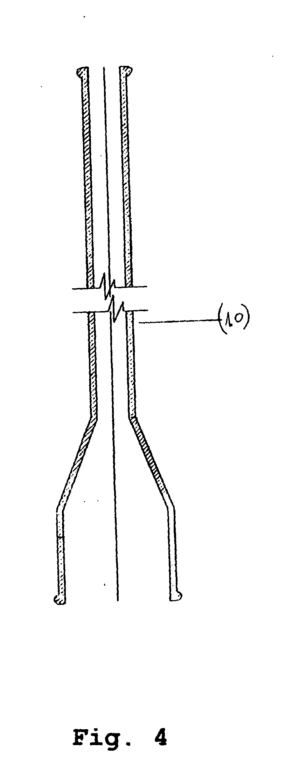

figure 4, shows a cut view of the electrical cables protector, for the electric feeding of the UV lamps;
figure 5, shows a cut view of a support ring;
figure 6, shows a ground view of a packing for the tubes conforming the reactor;
figure 7, shows a ground view of one of the support discs for the glass strips carrying the catalyst and the opening holes of the quarz tubes, protecting the UV lamps;
figure 8, shows a section cut view of the disc from figure 7;

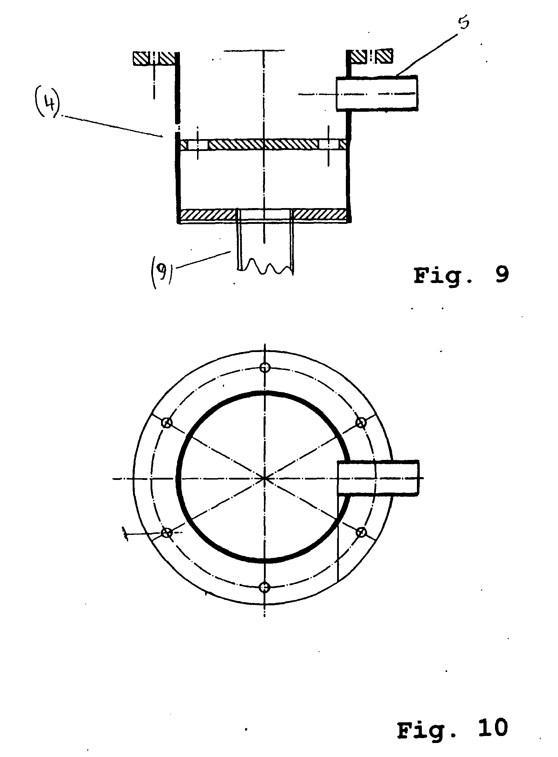

figure 9, shows a section cut view of the lower section of the reactor;
figure 10, shows a ground view of the lower part of the reactor;

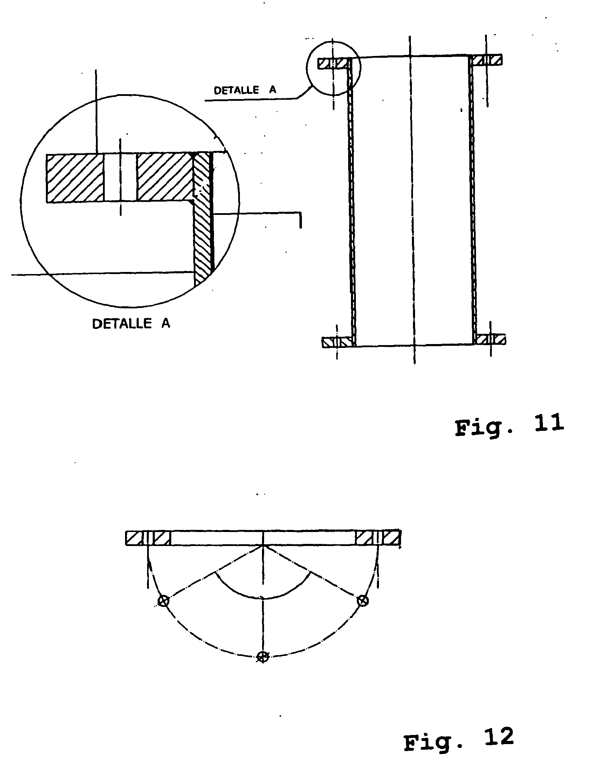

figure 11, shows a section cut view of external tube of the reactor;
figure 12, shows a section cut view of the lower fixation flange.

The following describes in detail, a preferably embodiment of the present invention.

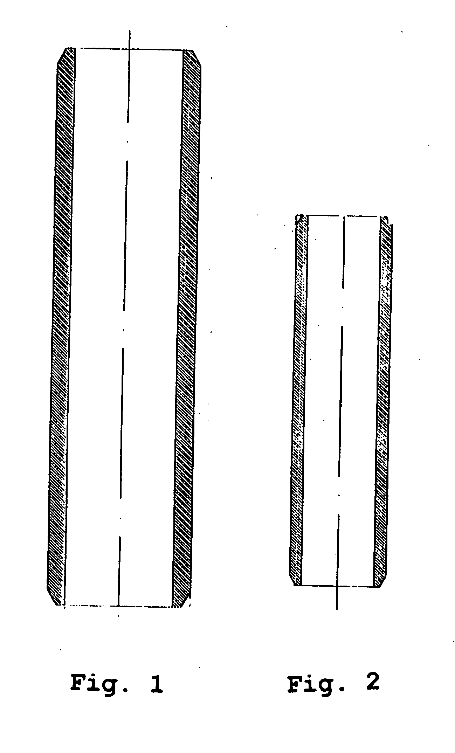

The reactor (1) of the present invention has a cylindrical configuration, with an external diameter approximately from 240 to 260 mm and a height between 1,500 to 1,890 mm, and an inner diameter between 200 to 280 mm (Fig 2), which is constructed on black polyethylene, having an approximate total capacity from 60 to 70 liters and a maximal operation flow from about 60 to 120 liters per minute. On the inner portion are vertically arranged 11 UV lamps (UV-C) with a length of 1.2 m (75 or 35 watts), protected by quartz tubes (2) of the same length, in order to avoid the direct contact with water, the specific reaction area is approximately 36 a 60 mt² per each cubic meter, and 36 glass plates which are covered with supported titanium oxide (TiO₂), which offer a total impregnated surface of approximately from 2.6 to 3.0 mts². The inner wall of the reactor is covered by a stainless steel film, with mirror finish, of 0.8 mm thick.

On an alternative embodiment, can be considered a design with a higher amount of UV lamps on the photocatalytic reactor, per example, as a reactor provided with 11 UV lamps corresponding to 89 glass plates covered with the catalyst (TiO₂).

The cylinder forming the reactor is divided in 4 sections (3). The lower consists in a small cylindrical chamber (4) into which enters the wastewater to be treated through a pipe or tube (9) with a 25.4 mm (1 inch) diameter (Fig. 2), said chamber has a capacity of about 48 1. The second and third section, that joined sum 1,200 mm of high, comprise the photochemical reaction chamber, composed by the lamps protected with quartz, impregnated plates, a stainless steel housing and the support discs (6) and the guide for the glass plates (7) and the swirlers or turbulence promoters (8). The last section is a cylindrical chamber (4) wherein is found the discharge tubes or discharge piping (5) with a 50.8 mm (2 inch) diameter, the inlet of the electrical connectors for the lamps through the corresponding protector (10) and the perforations for the disposal of the gas produced by the reaction.

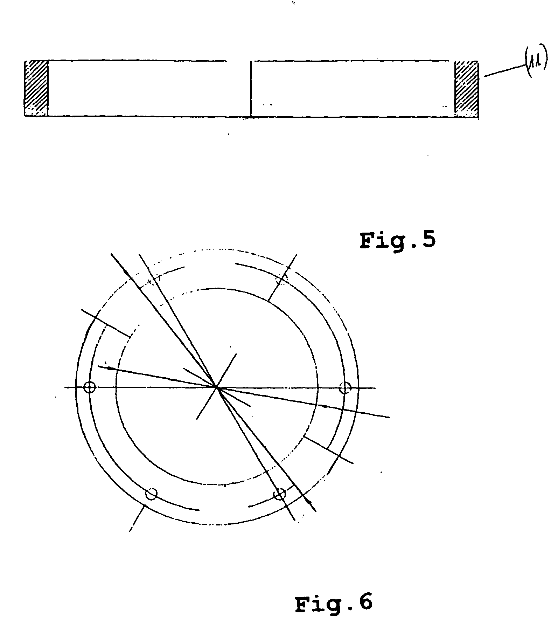

Finally, all these sections, are joined by flanges with rubber packing (11)(Fig. 5).

The lamps (UV-C) distribution is as follows: a lamp on the reactor center surrounded by the other four. These last (four) are distributed in a radial form to the first (at 90° one of each other), forming a circle. The spacing between the outer surface of the quartz tube protecting the central lamp and the other four lamps is of 40 mm.

The lamps, five in the preferred embodiment, are surrounded by 36 glass plates covered with titanium oxide which is supported over the two faces of the glass (high 30 cm and width 3 cm, thickness 0.25 cm), with parallel arrangement to the vertical axis of the lamp. The distance between the plates and the quartz tube surface, which protects the lamp, is 1 to 2.5 cm. The glass plate faces that are not directly radiated by the lamps are radiated by the central lamp and by the radiation reflected from the inner wall of the reactor, from the stainless steel sheet covering it.

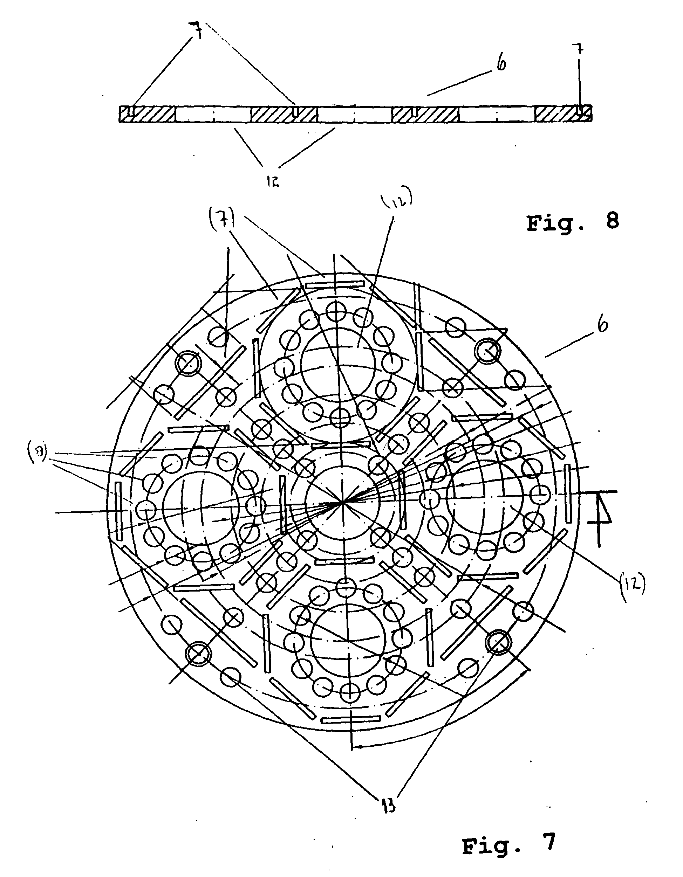

In order too assure the plates position around the lamps, are used PVC discs (6) with 23.6 cm diameter and 1.0 cm thickness (Fig. 7 and 8), provided in a perpendicular form to the cylinder axis conforming the reactor. Said discs have perforations or holes (12) by the lamps and disc grooves (7) pass through, wherein are introduced the ends of the glass plates, fixing its position around the lamps.

Furthermore, said discs (6) exhibit perforations (8) with 9.5 mm (3/8 inch) diameter by which the water to be treated is forced to pass, generating a strong turbulence within the reactor (Fig. 2).

Finally, the reaction chamber (3) is conformed by four floors of catalyst impregnated glass plates; floors that are crossed are all its length by the UV, which are protected by quartz tubes (2). The floors are formed by the discs (6) which support the plates, our copper tubes (13) maintaining the spacing between the discs (6), being all linked by four stainless steel rods (14) with 9.5 mm (3/8 inch) diameter, with wires and nut at their ends, said rods (14) link the floors. This way allows forming a supported catalyst package, which is ready to be excited by the energy issued by the UV-C light lamps, during the pass of the water to be treated.

The use of UV-C lamps (wavelength: 254 nm), allows achieving the maximal energy or radiating the catalyst. This property diminishes as the wavelength increases of the type A or B UV light. Additionally, the use of this germicidal lamp allows disinfecting the water while it is treated for the elimination of other toxic compounds.

The design and configuration of the reactor, the sections linked by flanges and the use of the independent support discs (6), allow to easily changing the plates with the supported catalyst. The impregnated plates can be changed in an individual form or as groups, if the catalyst exhibits a wear problem or its loss due to friction. Likewise, the lamps and quartz tubes can be easily replaced.

The distance between the plates with catalyst supported and the UV-C light source is 1 to 2.5 cm. According to the experimental assays, this distance allows that the higher surface of the plate gets radiated. A higher distance produces a decrease of the light energy that is radiated on the supported catalyst, since this is inversely proportional to the square of the spacing distance between them. Further, is added the adverse effect of the water absorbance between the light soured and the plate with catalyst. On the other hand, all the radiation surface of the UV-C lamp is used on the reactor, always keeping the 1 to 2.5 cm distance between the source and the plate.

Due to the plates surrounding said lamp configuration, the light energy generated by the UV-C light lamp, arrives over the surface of the impregnated plates on a perpendicular way, assuring the maximum irradiation. If the angle of incidence of the light over the plates or other substrate is lower than 90°, the light energy falling on the plate decreases in function of the angle cosine, according to the Lambert Law.

There are other patented configurations for a supported catalyst reactor, which are intended to obtain a higher surface of catalyst irradiated (such as screen sedimentary baffles), through a decrease of the incidence angle and enhancing the catalyst specific surface. Although it is feasible to increase on this form the irradiated area, the energy that reaches to the catalyst, is which really allows its excitation, drastically decreasing the cosine of the angle.

The central UV-C lamp of the reactor and the stainless steel housing, with mirror finish, allow to irradiate the rear face of the impregnated plates, taking advantage of all the light energy generated in the reactor, by reflection in the steel or by direct incidence.

In order to assure the turbulence within the reactor of the present invention and to increase the contact between the pollutant substances that are dissolved in the water and the supported catalyst on the glass plates (mass transference), are used five horizontal discs (6) with perforations (8) of 9.5 mm (3/8 inch) diameter by where the water is forced to pass.

The perforations or holes (8) arrangement on the support discs is mainly centered between the glass plates and the light source (Fig. 7 and 8).

The use of rectangular common glass plates as substrate for supporting the catalyst, facilitates its easily obtaining, since it is highly available on the market, its impregnation and low cost. The use of other configurations, as cylinders and small glass spheres do not produce the advantages detailed in the present invention, for the plates.

The design and operation of the reactor is planed in order to make it operating as a treatment unit, facilitating its connection in series or parallel with other reactors of the same type, depending of the pollutant to be treated, the concentration of the same, the removal rate, the fluid volume or the space availability.

All the materials used for the construction of this reactor area available on market (standard manufacture dimensions and features), on fast way and low cost. There is no an issue or raw material requiring a special sizing or a previous treatment or conditioning, unless the catalyst support on the substrate.

**TABLE 1Design Features on approximated Measures**

| Feature | Dimension | Unit |
|---|---|---|
| Total height | 169 | cm |
| External diameter | 25 | cm |
| Inner diameter | 24 | cm |
| Reaction chamber height | 120 | cm |
| Water volume in the reaction chamber | 48 | L |
| Total water volume in the reactor | 64 | L |
| surface of plates with impregnated catalyst | 2,8 | m² |
| Specific reaction surface | 60 | m² per cubic meter |
| Maximum operation flow | 60 - 120 | Lt/min |
| Light incident angle over the catalyst | 90 | o |

In other alternative embodiment the photocatalytic reactor of the present invention can be used for implementing and operating different processes, for purifying liquids containing or that have been polluted with toxic compounds, which use supported heterogeneous photocatalysis as the treatment basic principle. Said compounds can be selected from: phenols, organochlorine compounds, residues from cellulose plants, abattoirs, industrial processes plants, antibiotics and drugs production, wood preserving agents (pentachlorophenol), pesticides, metal ions, among others.

Even, other embodiment of the present invention describes the method for using the photocatalyst of the instant invention, which process can be used as above mentioned, in aquaculture for removing different compounds, based on the water pH value. At alkaline pH values (9 to 12) the system can be used for removing ammonium, nitrite, dissolved organic matter and disinfecting water. At a neutral pH value (6.5 to 8), the system can be used for removing nitrite, dissolved organic matter, disinfecting water, however it is very little efficient for removing ammonium. Both processes require of mechanic filtration of the water (between 40 to 60 µ,m) before to applying the process.

Water purification process with an alkaline pH.

This process consists of two basic steps, first, a physical filtration step and pH adjustment, and a second step, corresponding to the photocatalytic system which is improved by the radicals produced by the Ozone degradation (UV /03 /Ti02) .

The process is able of removing ammonium, nitrite, dissolved organic matter and disinfecting water simultaneously. Specifically, alter a photocatalysis treatment of 1 - 2 hours, improved by the radicals produced by the Ozone degradation (UV/O₃/TiO₂) is achieved an ammonium level reduction from 45% to 65% %, nitrite between 80 to 100%,the organic matter reduction, measured as TOC (Total organic carbon) (mg/ml) from 30 to 40%, and as COD DQO (mg/L) (Chemical Oxygen Demand) between 40 to 70%, and the disinfection of the water, as part of the disinfection process produced by the UV Light and the hydroxyl radicals produced by the titanium dioxide, and Ozone which act as germicides and bactericides.

Water purification process with a neutral pH.

This consists of two basic steps, first, a physical filtration step and a second step, corresponding to the photocatalytic system improved by the radicals produced by the Ozone degradation (UV/O3/TiO2).

The process is able of remove the dissolved organic matter and disinfecting the water simultaneously. Specifically, a photocatalysis treatment of 1 to 2 hours, is able to reduce the organic matter, measured as COD (mg/L) (Chemical Oxygen Demand) between 30 to 40%, and as TOC (mg/ml) (Total Oxygen Demand) between 30% to 40%, removing among 60% to 90% of the nitrite and the disinfection of water, as part of the disinfecting process produced by the UV light and the hydroxyl radicals produced by the titanium dioxide and Ozone, which function as germicides and bactericides.

The process, at an alkaline as well as at a neutral pH value, is not affected by the temperature changes, being the following variables, those that have the higher influence over the system efficiency, the good oxygenation and the optimal incidence of the UV light on the catalyst. Related to the latter variable, the catalytic system was optimized considering the maximum advantage of the light-catalyst, therefore defining the configuration of a plate reactor wherein the distance light-catalyst surface is from 2.3 to 2.5 cm, being possible a shorter distance.

It is necessary to consider that the catalyst is supported, being this one more efficient than a catalyst in suspension or suspended catalyst, since, the contacting surface between the catalyst and the pollutant is increased; further avoiding, in the process, the subsequent filtration and washing steps for recovering the catalyst.

The conventional way of removing, from the liquid wastes generated by the intensive aquaculture process comprising re-circulation systems, regarding nitrogenous compounds and the dissolved organic matter, considers the use of mechanic filtration for removing off the suspended and sediment organic matter, the ozone filters for the dissolved matter, which exhibit a high mortality risks due to the residual concentration, and the use of biological filters for removing nitrogenous compounds. The use of UV light has become the more used water disinfection system, mainly due to its low cost, the reduced treatment time and its null effect on the cultured species. However, its efficiency is limited by the presence of suspended solids, which causes a "shade" or shield effect for bacteria and other microorganisms.

In the present invention has been developed a new alternative, which is totally different from the ammonium, nitrite and organic matter removal. The present invention considers a set of unitary operations characterized by a sequence of steps, within which, the main is constituted by the use of heterogeneous photocatalysis with a supported catalyst and radicals produced by the Ozone degradation, for according to the operation conditions (pH), ammonium and nitrite removal, the dissolved organic matter and disinfecting wastewater from confined aquaculture.

The water treatment process is carried out independently from the circuit of the culture water, following an embodiment of a re-circulation system type "batch". It is to say, the water is withdraw from the culture system, it is treated and subsequently it is returned to the same system.

The process can be used only for removing ammonium, nitrite, dissolved organic matter and for disinfecting, if the operation is carried out at an alkaline pH range, a neutral pH value can only be for removing nitrite, dissolved organic matter and disinfecting the water, or it can be used in combination for increasing the removal of the dissolved organic matter and for disinfecting.

In combined systems, the water to be treated must be previously conditioned submitting it to a mechanic filtration process and adjusting the pH value, according to the water features and what is desired to be removed, pre and post treatment.

Thus, the step corresponding to the photocatalytic treatment is carried out in two sub-steps, which are arranged in series.

In the first sub-step is carried out the photocatalysis and the production of radicals by the Ozone degradation, for removing ammonium, nitrite, dissolved organic matter and disinfecting at alkaline pH, In a range comprised between 9-12, and in the second sub-step is carried out the removal of nitrite, dissolved organic matter and the disinfection process at a neutral pH value comprised between 8 and 7.

The water is withdrawn from the culture system, it is pre-filtered between 40 to 60 µm, verifying the initial pH value of the water originating from the system. If necessary, this value must be adjusted to a pH value comprised between 9 and 12, for subsequently begin to be treated in a reactor submitting it to the supported photocatalysis and to the presence of radicals produced by the Ozone degradation, during a period of time according to the initial ammonium concentrations in the original system. With such a treatment, is achieved a decrease of the ammonium, nitrite, the removal of the dissolved organic matter and the disinfection of the system, being said decrease caused by the photocatalytic process and by those radicals produced by the Ozone degradation. Following the treatment the water must be prepared or conditioned to pH values near to a 7.5-8, the treated for removing nitrite, the dissolved organic matter and disinfecting, being possible to return the treated water into the original system.

The process has the following advantages:
It does not require previous conditioning periods for the photocatalytic treatment system;
the process does not generate solids or sediment compounds, which must be removed or eliminated, being the pollutants stable and continuous in the time;
the process can be applied under treatment conditions wherein are used necessary antibiotics for intensive aquaculture, unlike those systems dependent from biologic filters;
likewise, the process can operate in low temperature conditions without losing its removal efficiency, unlike the biologic filtration systems, which must be stables at their operating temperature since they depend from bacteria, which are able to degrading between 14 and 28°C.

Further, the process does not require of minimal conditions for the pollutant concentrations in water for operating nor a stabilization period of time as needed by the biologic filters.

Additionally, the process allows achieving the water disinfection and the removal of the dissolved organic matter.

### EXAMPLE

As an example, a laboratory assay was carried out for the ammonium removal process, using a real simple of water from a Trout *(Onchorynchus mykiss)* culture, from the Centro de Cultivo Piloto de la Universidad Católica de la Santisima Concepción, Chile.

The water from the culture was filtered at 45 µm and then prepared for the treatment using photocatalysis and the radicals produced by Ozone. The pH value was increased to 12 using NaOH and the process was begun. The following corresponds to the obtained result:

| Treatment time (min) | Ammonium concentration (mg/l) | Nitrite (mg/lt) | Bacterial load (U.F.C.) | TOC (mg/lt) | DQO(mg/lt) |
|---|---|---|---|---|---|
| 0 | 2,4 | 1.2 | 10300 | < 1 | 65 |
| 60 | 1 | 0 | 0 | < 1 | 40 |
| 120 | 0,95 | 0 | 0 | < 1 | 25 |

**Replication**

| Treatment time (min) | Ammonium concentration (mg/l) | Nitrite (mg/lt) | Bacterial load (U.F.C.) | TOC (mg/lt) | DQO (mg/lt) |
|---|---|---|---|---|---|
| 0 | 2,3 | 1.1 | 12300 | < 1 | 60 |
| 60 | 0,97 | 0 | 0 | < 1 | 40 |
| 120 | 0,9 | 0 | 0 | < 1 | 27 |

The assays show that in two hour, the ammonium removal was of 58%, the total disinfection is achieved and the dissolved organic matter is reduced in more than 50%.

Although some embodiments of the invention have been described, it should result obvious for the person skilled in the art that many modifications to the invention can be made without separating it from its spirit or scope. All the modifications comprised within the scope of the instant invention, are intended to be covered by the annexed claims.

## Claims

1. A photocatalytic reactor, based on UV light sources and a supported catalyst based on titanium dioxide (TiO₂) and Ozone gas for producing hydroxyl radicals for purification of waste water from confined aquaculture based on Advanced Oxidation Processes (AOP), wherein the catalyst is supported over glass films in the form of fixed strips within said reactor at a pre-established distance from the UV light source, where the water is treated by "batches" being re-circulated and returned to the circuit, the waste water id fed by the lower end of the reactor and submitted to a strong turbulence as passing by perforations existing on the supports forming the floor of the reaction chambers.

2. The photocatalytic reactor with a modular configuration, based on UV light sources according to claim 1, wherein the catalyst is deposited on the faces of glass strips, which are fixed a a pre-established spacing from the UV light source, within the photochemical reaction chamber.

3. The photocatalytic reactor with a modular configuration, based on UV light sources according to claim 1, wherein the catalyst is titanium dioxide (TiO₂) and which is deposited over a plurality of glass strips.

4. The photocatalytic reactor with a modular configuration, based on UV light sources according to claim 3, wherein the glass strips with catalyst are fixed at a spacing of 1 to 2.5 cm from all the UV light sources, being these UV lamps or the radiation reflected by the mirror finished surfaces within the reactor.

5. The photocatalytic reactor with a modular configuration, based on UV light sources according to claim 3, wherein the glass strips with catalyst are fixed at grooves on the discs (6) which form the floors of the reaction chambers, said strips are 30 cm height, 3 cm width and 0.25 cm thick.

6. The photocatalytic reactor with a modular configuration, based on UV light sources according to claim 1, wherein the UV radiation sources, are of the UV-C type with a wavelength of 254 nm of 75 or 35 watts.

7. The photocatalytic reactor with a modular configuration, based on UV light sources according to claim 6, wherein the UV lamps are arranged within a quartz tube for avoiding their direct contact with water.

8. The photocatalytic reactor with a modular configuration, based on UV light sources according to claim 6, wherein the UV lamps are arranged in a radial form and fixed on the discs (6) which are crossed by five or more perforations through the length of the reaction chambers, describing a circle around the central lamp, located the external lamps at 90 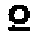 one of each other.

9. The photocatalytic reactor with a modular configuration, based on UV light sources according to claim 1, wherein the discs (6 or more) further to the perforations for the UV lamps, have a plurality of perforations of 9.5 mm diameter, arranged in a radial form around the perforations or holes of the lamps, wherein said perforations produce a strong turbulence of the liquid.

10. The photocatalytic reactor with a modular configuration, based on UV light sources according to claim 9, wherein the turbulence produced by the perforations of 9.5 mm diameter on each of the discs (6 or more) increases the reactor yield when is increased the water surface which is contacted with the UV radiation.

11. The photocatalytic reactor with a modular configuration, based on UV light sources according to claim 9, wherein it can the supported heterogeneous photocatalysis can be used for removing dissolved organic matter, ammonium and for disinfection of waste water from other industrial processes, such as waste water from cellulose plants, abattoirs, industrial processes plants, pesticide treatments, pharmaceutical drugs elimination, among others.

12. The photocatalytic reactor with a modular configuration, based on UV light sources according to claim 9, wherein it can be used for the treatment and conditioning of the re-circulating water on confined culture systems for fish, shellfish and crustacean, on their egg-larvae production phase, juvenile-seeds, fattening-growth, antibiotic application and maintenance of reproducers.

13. The photocatalytic reactor with a modular configuration, according to claim 12, wherein it can be used for setting out and operating different processes for purifying waste water or liquids with toxic compounds, which use supported heterogeneous photocatalysis or other advanced oxidative processes combination as the basic principle for the treatment; among said compounds can be found: phenols, organochlorine compounds, residues from production processes for antibiotics and pharmacological drugs, wood preserving agents (pentachlorophenol), pesticides, metal ions, among others.

14. The process for the use of a photocatalyst according to claim 1, wherein the process allows to remove the ammonium, nitrite and the organic matter, it purifies and disinfects the waste water from confined aquaculture, wherein the water is treated within said reactor through heterogeneous photocatalysis, and the production of hydroxyl radicals (OH.) by the Ozone destruction, and where the pollutant, non biodegradable organic compounds, are easily treated with homogeneous and/or heterogeneous photo-oxidative systems (TiO₂/UV/O₃), based on a UV light source, in a medium with a supported catalyst forming part of a circuit through which circulates a "batch" or an established amount of water to be treated in a closed circuit, which is independent from the re-circulating system for the waste water from aquaculture, then on a subsequent step, the water is submitted to a pH adjustment and is returned to the re-circulating system.

15. The process according to claim 1, wherein the reactor removes the ammonium, nitrite, the dissolved organic matter and disinfects the water, exposing the polluted water to photocatalysis and radicals generated by the Ozone degradation on a UV light source, based on UV lamps, in a reaction catalyzed by a supported catalyst.

16. The process according to claim 1, wherein the water is submitted to an intense, homogeneous and/or heterogeneous photo-oxidation process, improved by hydroxyl radicals produced by the Ozone degradation.

17. The process according to claim 15, wherein in the photo-oxidation process the water is exposed to a UV light source, originated from a plurality of lamps, wherein said process is carried out in two sub-steps.

18. The process according to claim 1, wherein the agent that produces hydroxyl radicals is the supported catalyst agent titanium dioxide (TiO₂) and Ozone which is degraded by the UV light, producing radicals.

19. The process according to claim 1, wherein both catalytic treatment sub-steps are carried out in series, the first sub-step for removing the organic matter, and nitrite at a neutral pH value comprised between 8 and 7, and a second sub-step, carried out within the reactor, wherein is carried out a photocatalysis and oxidation for removing ammonium and nitrite, dissolved organic matter and disinfecting water at a pH value comprised in a range of 9-12.

20. The process according to claim 1, wherein the ammonium and nitrite, dissolved organic matter degradation degradation and water disinfection occurs at room temperature or at a lower temperature, without affecting the yield of the process.

21. The process according to claim 14, wherein it can be applied during the use of the necessary antibiotics in the intensive aquaculture.

22. The process according to claim 14, wherein the system does not require a previous conditioning period for carrying out the wastewater treatment.

23. The process according to claim 14, wherein the process does not require of minimum conditions for the pollutants concentration nor a stabilization period of time for its optimal function.

24. The process according to claim 1, wherein the UV light, the catalyst, TiO₂, and the radicals produced by the Ozone degradation, work as a germicidal and bactericide agent.

25. The process according to claim 3, wherein the catalyst, TiO₂, is supported on glass plates, which are located between 1 to 2.5 cm from the UV source.

26. The process according to claim 14, wherein the process for treating the water is carried out in an independent way from the culture circuit of water, by an embodiment of the re-circulating system type "batch" or an pre-established amount of water, which is subsequently returned to the re-circulating system.

27. The process according to claim 14, wherein the process for treating the water at an alkaline pH, simultaneously removes ammonium, nitrite, dissolved organic matter and disinfects.

28. The process according to claim 14, wherein the process for treating the water at a neutral pH, simultaneously removes the nitrite, dissolved organic matter and disinfects.
